# EUROPÄISCHE PATENTSCHRIFT

(11) **EP 3 830 933 B1**
(45) Veröffentlichungstag und Bekanntmachung des Hinweises auf die Patenterteilung: **13.09.2023**
(21) Anmeldenummer: 19786465.5
(22) Anmeldetag: 25.09.2019
(51) Int. Cl.: H02K 3/50, H02K 3/51, H02K 9/00, H02K 3/24, H02K 9/10

(54) **TURBOGENERATOR MIT VERBLOCKUNGSELEMENT FÜR DIE ROTORWICKELKÖPFE UND LÄUFERKAPPE MIT RADIALEN VENTILATIONSBOHRUNGEN**
TURBOGENERATOR WITH BLOCKING ELEMENT FOR THE ROTOR WINDING HEADS AND ROTOR CAP WITH RADIAL VENTILATION BORES.
TURBOGÉNÉRATEUR AVEC ÉLÉMENT DE BLOCAGE POUR LES TÊTES BOBINÉES DE ROTOR ET CAPOT DE TÊTE DE ROTOR AYANT DE FORAGES DE VENTILATION

(30) Priorität: 27.09.2018 DE 102018216586
(43) Veröffentlichungstag der Anmeldung: 09.06.2021
(73) Patentinhaber: Siemens Energy Global GmbH & Co. KG, 81739 München (DE)
(72) Erfinder: KOWALSKI, Matthias, 45478 Mülheim an der Ruhr (DE)
(86) Internationale Anmeldenummer: PCT/EP2019/075809
(87) Internationale Veröffentlichungsnummer: WO 2020/064802

(56) Entgegenhaltungen:
- EP-A1- 2 112 746
- EP-A1- 3 174 180
- EP-A2- 0 160 887
- EP-A2- 1 841 042
- WO-A1-97/39513
- CH-A- 334 085
- DE-A1- 1 930 508
- DE-A1-102014 206 010
- DE-T2- 60 213 557
- FR-A- 721 972
- GB-A- 738 803
- JP-A- S5 765 237
- US-A- 4 546 279

## Beschreibung

Die Erfindung betrifft einen Turbogenerator aufweisend einen Rotor, eine Rotorkopfwicklung und ein Verblockungselement.

Der drehende Teil eines Kraftwerksgenerators dient der Erzeugung eines Erregerfeldes. Hierzu wird die vom Rotor beherbergte Erregerwicklung mit Gleichstrom beaufschlagt. Aus dem Stromfluss durch die Wicklung (zum Beispiel Kupfer) entsteht Wärme. Diese schlägt sich in erhöhten Temperaturen nieder, welche die Ausnutzbarkeit der Maschine limitiert. Vor allem luftgekühlte Generatoren mit direkt wassergekühlter Ständerwicklung sind durch die Temperaturen in der Rotorwicklung limitiert. Dies hat zur Entwicklung von Rotorkappen (Läuferkappen) geführt, welche mit radialen Bohrungen versehen sind.

Diese ermöglichen es nun, dass der Rotorwickelkopf von einer direkten, radial gerichteten Strömung konvektiv gekühlt wird. Dies verbessert das Wärmeabfuhrvermögen um ein Vielfaches. Dies zieht jedoch 2 große Nachteile mit sich:
1) Der erhöhte Volumenstrom durch die Läuferkappe vermindert den Volumenstrom durch die Nutgrundkanäle, welcher zur Kühlung des Aktivteils des Rotors benötig wird.
2) Durch den großen Volumenstrom, der radial aus der Kappe austritt, wird eine Art Barriere zum Luftspalteintritt hin geschaffen, so dass der Ständeraktivteil (zum Beispiel das Blechpaket) nicht mehr gut gekühlt wird.

Eine Verkleinerung der radialen Bohrungen drosselt zwar den Volumenstrom und mindert somit die oben beschriebenen Probleme, jedoch verschlechtern sich die Kühlbedingungen sehr deutlich.

Aus der JP S57 65237 A ist ein Verblockungselement für die Rotorkopfwicklung eines Turbogenerators bekannt, bei dem die Raumform des Verblockungselementes an die Kontur des angrenzenden Teilleiters der Rotorkopfwicklung angepasst ist und bei dem an der dem Teilleiter zugewandten Seite ein verkippter Kanal für ein Kühlfluid von einer Einlassöffnung auf dem kleinen Radius zu einer Auslassöffnung auf dem großen Radius gebildet ist.

Aus der DE 602 13 557 T2 ist ein Verfahren zur Herstellung eines Läuferblocks, der zwischen Leiterwicklungen am Endbereich eines Generators angeordnet ist, bekannt. Ein solcher Läuferblock kann geschwungene Kanäle umfassen, um einen Kühlmittelstrom (zum Beispiel Luft, Wasserstoff) zu leiten, der die Leiterwicklungen während des Generatorbetriebes kühlt.

Der Erfindung liegt das Problem zugrunde, einen Turbogenerator aufweisend eine Rotorkappe mit radialen Kühlfluidbohrungen derart weiterzubilden, dass die konvektive Kühlung der Rotorwicklung bezogen auf den Volumenstrom signifikant verbessert wird.

Das Problem wird durch einen Gegenstand mit den Merkmalen des Anspruchs 1 gelöst.

Die Erfindung macht sich die Erkenntnis zu Nutze, dass das Kühlgas bei Läuferkappen mit radialen Bohrungen ineffizient genutzt wird.

Die Erfindung schafft ein Verblockungselement für Turbogeneratoren, das über eine Einlassöffnung (auf kleinem Radius) und eine Auslassöffnung (auf höchstem Radius) verfügt. Die Auslassöffnung knüpft an die Bohrung durch die Läuferkappe an. Das Element verfügt vorzugsweise über eine Kanalführung, welche das Kühlfluid gezielt an den wärmegenerierenden Körpern entlangführt, beispielsweise geschlängelt / mäanderförmig.

Die Erfindung sieht ein Verblockungselement (Glas/Plastik) vor, welches durch eingebrachte Gasführungskanäle das Kühlgas gezielt an den zu kühlenden Bauteilen (Wicklung) entlang führt. Das Element ist vorgesehen für eine Anordnung zwischen den Leitern im Rotorwickelkopf. Das gezeigte Beispiel bezieht sich auf eine Platzierung zwischen den Tangentialleitern. Der Einsatz zwischen den Axialleitern ist ebenfalls möglich. Durch ein solches Element wird der Strömungswiderstand erhöht, was eine Reduzierung des Volumenstroms nach sich zieht und somit die oben beschriebenen Problemstellungen löst. Weiterhin wird der strömende Gasfluss optimal an der Wicklung langeführt, was die konvektive Kühlung pro Volumenstrom deutlich verbessert. Ein Merkmal der Erfindung ist es, dass sich die Einlassöffnung des Kanals unten (auf kleinem Radius) und die Auslassöffnung oben (auf höchstem Radius) befinden.

Im Vergleich zur gängigen Rotor-Pumping /Thermo-Siphon Kühlung, verbessert sich das Wärmeabfuhrvermögen sehr deutlich (zum Beispiel Faktor 2,5), wenn diese Elemente eingesetzt werden und mit radialen Ventilationsbohrungen der Rotorkappe kommunizieren.

Der Einsatz solcher gelochten Rotorkappen in Verbindung mit den vorgestellten Verblockungselementen mit Kanalstruktur, stellt sowohl für das Neuanlagen-, als auch für das Servicegeschäft eine Möglichkeit zur zusätzlichen Leistungssteigerung von Turbogeneratoren dar.

Die geplante Verwendung dieser gelochten Läuferkappen unterliegt wie eingangs geschildert dem Problem des hohen Volumenstromkonsums. Dies wird durch die Erfindung gelöst. Für Generatoren mit gelochten Rotorkappen zeichnen sich folglich zwei Vorteile ab:
- Bessere Kühlung des Rotor-Aktivteils
- Starker Abbau der Gasschranke am Luftspalteintritt

Durch den vergleichsweise kleineren Volumenstrom ist die benötigte Förderleistung des Rotors auch verringert, hieraus folgt ein verbesserter Wirkungsgrad für Maschinen mit gelochter Läuferkappe.

Die Erfindung wird im Folgenden als Ausführungsbeispiel in einem zum Verständnis erforderlichen Umfang anhand von Figuren näher erläutert. Dabei zeigen:
Fig 1 ein erfindungsgemäßes Verblockungselement 1 mit einem mäanderförmigen Kühlkanal 2 auf der Seite, welcher dem Tangentialleiter zugewandt ist und
Fig 2 eine Rotorkappe mit radialen Bohrungen 5

Die Bezeichnung radial, tangential und axial bezieht sich auf die Ausrichtung der Teilleiter bezüglich der Rotationsachse des Läufers.

Verblockungselemente werden in die Räume zwischen Teilleitern eines Rotorwickelkopfes eingefügt und stabilisieren die Teilleiter gegenseitig. Die Teilleiter können durch Tangentialleiter oder Axialleiter gegeben sein. Ein Verblockungselement mag den zwischen zwei Teilleitern aufgespannten Raum nahezu vollständig ausfüllen. Die Verblockungselemente sind aus elektrisch isolierendem Material, wie zum Beispiel Glas, Plastik, Kunststoff oder Keramik, ausgeführt.

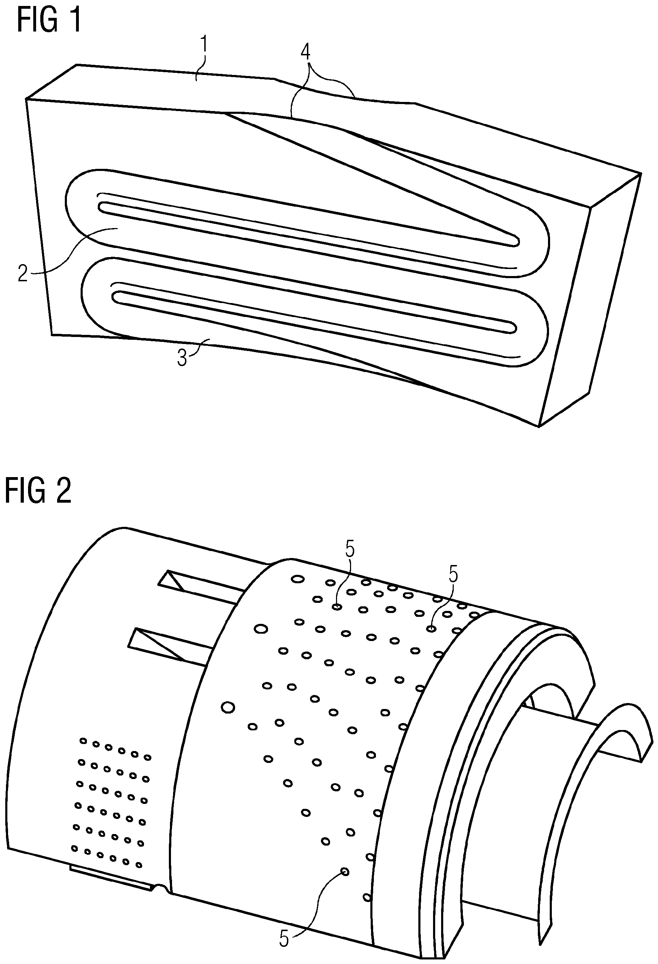

In der Ausführungsform nach Fig 1 weist das Verblockungselement annähernd Quaderform auf und ist beidseitig mit einer mäanderförmigen Kühlkanalstruktur auf den der Wicklung/den Teilleitern zugewandten Oberflächen versehen, welche den Bereich oberhalb des Rotorschaftes mit der Bohrung in der Läuferkappe hydraulisch verbindet. Der Kühlkanal (die Vertiefung) mag im Querschnitt eine halb-elliptische Form aufweisen.

Durch die Pumpwirkung (beziehungsweise die Fliehkräfte) wird, wie auch ohne das Element, das Kühlfluid, wie zum Beispiel Gas, Luft, Wasserstoff, radial nach außen gefördert. Das zusätzliche Element erfüllt drei Aufgaben:
1) Hydraulische Verbindung der Gebiete der Räume unterhalb der Läuferkappe (und unterhalb des Rotorwickelkopfes) mit dem Gebiet oberhalb der Läuferkappe (durch Kanäle),
2) Drosselung des Volumenstroms durch Widerstandserhöhung,
3) Führung des Volumenstroms des Kühlfluids an die zu kühlenden Komponenten durch Kühlkanäle an der Oberfläche des Teilleiters/Elements, welche halboffen sind.

Es ist leicht ersichtlich, dass durch die Verblockung deutlich weniger Volumenstrom tritt (beispielsweise lediglich 6%). Im Vergleich zu einem sehr gängigen Kühlmechanismus (keine Verblockung und keine Bohrungen in der Läuferkappe) dem sogenannten Rotor-Pumping (auch: Thermo-Siphon) zeichnen sich starke Verbesserungen ab.

Trotz des reduzierten Volumenstroms ist durch die Verblockung eine Erhöhung der Wärmeübergangszahl auf das über 2,5-fache möglich. Ohne diese Erfindung wäre die Wärmeübergangszahl sogar 3-mal so hoch, jedoch würde dann der fast 20-fache Volumenstrom benötigt. Dies hätte dann die oben angegebenen Nachteile zur Folge.

Mögliche Fertigungsmöglichkeiten sind neben dem Fräsen auch das Drucken oder andere Additive Verfahren.

Die vorliegende Erfindung wurde zu Illustrationszwecken anhand von konkreten Ausführungsbeispielen im Detail erläutert. Dabei können Elemente der einzelnen Ausführungsbeispiele auch miteinander kombiniert werden. Die Erfindung soll daher nicht auf einzelne Ausführungsbeispiele beschränkt sein, sondern lediglich eine Beschränkung durch die angehängten Ansprüche erfahren.

### Bezugszeichen

1 - Verblockungselement
2 - Vertiefung, Kanal für Kühlfluid
3 - Einlass an kleinem Radius
4 - Auslass an großem Radius
5 - Bohrung

## Patentansprüche

1. Turbogenerator aufweisend einen Rotor, eine Rotorkopfwicklung und ein Verblockungselement, wobei das Verblockungselement in einem Raum zwischen Teilleitern der Rotorkopfwicklung eingefügt ist und die Teilleiter gegenseitig stabilisiert, bei dem die Bezeichnungen radial, tangential und axial sich auf die Rotationsachse des Rotors beziehen,
die Raumform des Verblockungselementes (1) an die Kontur eines angrenzenden Teilleiters der Rotorkopfwicklung angepasst ist,
das Verblockungselement an seiner diesem angrenzenden Teilleiter zugewandten Seite eine Vertiefung (2) aufweist, die einen Kanal für ein Kühlfluid von einer Einlassöffnung (3) auf dem kleinen Radius zu einer Auslassöffnung (4) auf dem großen Radius bildet und die Auslassöffnung des Verblockungselementes mit einer Bohrung (5) einer die Rotorkopfwicklung umschließenden Rotorkappe fluchtet.

2. Turbogenerator nach Anspruch 1
**dadurch gekennzeichnet, dass**
der angrenzende Teilleiter durch einen Tangentialleiter gegeben ist.

3. Turbogenerator nach einem der vorstehenden Ansprüche
**dadurch gekennzeichnet, dass**
der angrenzende Teilleiter durch einen Axialleiter gegeben ist.

4. Turbogenerator nach einem der vorstehenden Ansprüche
**dadurch gekennzeichnet, dass**
die Vertiefung schlangenförmig ausgestaltet ist.

5. Turbogenerator nach einem der vorstehenden Ansprüche
**dadurch gekennzeichnet, dass**
die Vertiefung mäanderförmig ausgestaltet ist.

6. Turbogenerator nach einem der vorstehenden Ansprüche
**dadurch gekennzeichnet, dass**
das Verblockungselement aus Glas gefertigt ist.

7. Turbogenerator nach einem der Ansprüche 1 bis 5
**dadurch gekennzeichnet, dass**
das Verblockungselement aus Kunststoff gefertigt ist.

8. Turbogenerator nach einem der vorstehenden Ansprüche
**dadurch gekennzeichnet, dass**
die Vertiefung im Querschnitt eine halb-elliptische Form aufweist.

## Claims

1. Turbogenerator having a rotor, a rotor head winding and a blocking element, wherein the blocking element is inserted into a space between subconductors of the rotor winding and mutually stabilizes the subconductors, in which the terms radial, tangential and axial relate to the axis of rotation of the rotor, the three-dimensional shape of the blocking element (1) is matched to the contour of an adjacent subconductor of the rotor head winding, the blocking element has, on its side facing this adjacent subconductor, a depression (2) which forms a channel for a cooling fluid from an inlet opening (3) on the small radius to an outlet opening (4) on the large radius, and the outlet opening of the blocking element is aligned with a bore (5) of a rotor cap surrounding the rotor head winding.

2. Turbogenerator according to Claim 1, **characterized in that** the adjacent subconductor is provided by a tangential conductor.

3. Turbogenerator according to one of the preceding claims, **characterized in that** the adjacent subconductor is provided by an axial conductor.

4. Turbogenerator according to one of the preceding claims, **characterized in that** the depression is of serpentine configuration.

5. Turbogenerator according to one of the preceding claims, **characterized in that** the depression is of meandering configuration.

6. Turbogenerator according to one of the preceding claims, **characterized in that** the blocking element is manufactured from glass.

7. Turbogenerator according to one of Claims 1 to 5, **characterized in that** the blocking element is manufactured from plastic.

8. Turbogenerator according to one of the preceding claims, **characterized in that** the depression has a semi-elliptical shape in cross section.

## Revendications

1. Turbogénérateur comprenant un rotor, un enroulement de tête de rotor et un élément de blocage, dans lequel l'élément de blocage est inséré dans un espace entre des conducteurs partiels de l'enroulement de la tête du rotor, et les conducteurs partiels sont stabilisés mutuellement, dans lequel les désignations radialement, tangentiellement et axialement se rapportent à l'axe de rotation du rotor,
la forme dans l'espace de l'élément (1) de blocage est adaptée au contour d'un conducteur partiel voisin de l'enroulement de la tête du rotor,
l'élément de blocage a, sur son côté tourné vers ce conducteur partiel voisin, un évidement (2), qui forme un conduit pour un fluide de refroidissement allant d'une ouverture (3) d'admission sur le petit rayon a une ouverture (4) de sortie sur le grand rayon, et l'ouverture de sortie de l'élément de blocage est alignée avec un trou (5) d'une coiffe du rotor entourant l'enroulement de la tête du rotor.

2. Turbogénérateur suivant la revendication 1,
**caractérisé en ce que**
le conducteur partiel voisin est donné par un conducteur tangentiel.

3. Turbogénérateur suivant l'une des revendications précédentes,
**caractérisé en ce que**
le conducteur partiel voisin est donné par un conducteur axial.

4. Turbogénérateur suivant l'une des revendications précédentes,
**caractérisé en ce que**
l'évidement est conformé hélicoidalement.

5. Turbogénérateur suivant l'une des revendications précédentes,
**caractérisé en ce que**
l'évidement est conformé sinueusement.

6. Turbogénérateur suivant l'une des revendications précédentes,
**caractérisé en ce que**
l'élément de blocage est en verre.

7. Turbogénérateur suivant l'une des revendications 1 à 5,
**caractérisé en ce que**
l'élément de blocage est en une matière plastique.

8. Turbogénérateur suivant l'une des revendications précédentes,
**caractérisé en ce que** l'évidement a, en section transversale, une forme hémi-elliptique.
